# EUROPÄISCHE PATENTSCHRIFT

(11) **EP 2 855 573 B1**
(45) Veröffentlichungstag und Bekanntmachung des Hinweises auf die Patenterteilung: **18.05.2016**
(21) Anmeldenummer: 13711683.6
(22) Anmeldetag: 22.03.2013
(51) Int. Cl.: C08K 5/29

(54) **NEUARTIGE CARBODIIMID-HALTIGE ZUSAMMENSETZUNGEN, EIN VERFAHREN ZU DEREN HERSTELLUNG UND DEREN VERWENDUNG**
NOVEL CARBODIIMIDE-CONTAINING COMPOSITIONS AND METHOD FOR THE PRODUCTION AND USE THEREOF
NOUVELLES COMPOSITIONS CONTENANT DES CARBODIIMIDES, PROCÉDÉ DE PRÉPARATION ET UTILISATION

(30) Priorität: 05.06.2012 EP 12170770
(43) Veröffentlichungstag der Anmeldung: 08.04.2015
(73) Patentinhaber: Rhein Chemie Rheinau GmbH, 68219 Mannheim (DE)
(72) Erfinder: LAUFER, Wilhelm, 67158 Ellerstadt (DE); ECKERT, Armin, 68794 Oberhausen-Rheinhausen (DE); HAUCK, Martina, 64287 Darmstadt (DE)
(74) Vertreter: Siegers, Britta
(86) Internationale Anmeldenummer: PCT/EP2013/056157
(87) Internationale Veröffentlichungsnummer: WO 2013/182329

(56) Entgegenhaltungen:
- WO-A1-2010/012695

## Beschreibung

Die Erfindung betrifft neuartige aromatische Carbodiimid- und Polyol-haltige Zusammensetzungen, ein Verfahren zu deren Herstellung und deren Verwendung als Stabilisator und/oder Kompatibilisator in esterbasierten Polyolen, in thermoplastischen Polyurethanen, Polyurethan-Elastomeren, PU-Klebstoffen, PU-Gießharzen oder PU-Schäumen.

Polyurethane entstehen durch Polyadditionsreaktion von Polyisocyanaten mit mehrwertigen Alkoholen, den Polyolen, nahezu quantitativ. Die Verknüpfung erfolgt durch die Reaktion einer Isocyanatgruppe (-N=C=O) eines Moleküls mit einer Hydroxygruppe (-OH) eines anderen Moleküls unter Bildung einer Urethangruppe (-NH-CO-O-).

Der Reaktionsverlauf zwischen Diisocyanat und Polyolen ist abhängig von dem Molverhältnis der Komponenten. Zwischenstufen mit gewünschtem Durchschnittsmolekulargewicht und gewünschten Endgruppen können durchaus erhalten werden. Diese Zwischenstufen können dann zu einem späteren Zeitpunkt mit einem Diol oder Diamin umgesetzt (kettenverlängert) werden, wobei dann das gewünschte Polyurethan bzw. Polyurethan-Polyharnstoff-Hybrid gebildet wird. Die Zwischenstufen werden im Allgemeinen als Prepolymer bezeichnet.

Geeignete Polyole für die Herstellung von Prepolymeren sind neben den Diolen auch Polyetherester oder Polyester mit endständigen Hydroxylgruppen (Polyesterpolyole).

Für die Herstellung von mechanisch oder dynamisch hochbelastbaren Polyurethanen werden vorzugsweise Polyesterpolyole eingesetzt.

Carbodiimide haben sich in vielen Anwendungen bewährt, z.B. als Hydrolyseschutzmittel für Thermoplasten, Polyole, Polyurethane etc.

Bevorzugt werden hierfür sterisch gehinderte Carbodiimide eingesetzt. Bekannt ist in diesem Zusammenhang vor allem 2,6-Diisopropylphenyl-Carbodiimid (Stabaxol® I der Rhein Chemie Rheinau GmbH).

Die im Stand der Technik bekannten Carbodiimide haben jedoch den Nachteil selbst bei niedrigen Temperaturen flüchtig zu sein. Sie sind thermisch nicht stabil, zeigen in Pulverform eine starke Neigung zur Verblockung und müssen vor der Applikation aufgeschmolzen werden, um erst dann zudosiert werden zu können. Weitere Carbodiimide wie in EP 0 597 382 A1 beschrieben, sind ebenfalls fest, bei gleicher Dosierrate nicht wirksam genug, nicht wirtschaftlich herstellbar und/oder kommerziell nicht verfügbar.

Es besteht daher ein Bedarf an neuartigen aromatischen Carbodiimid- und Polyol-haltigen Zusammensetzungen, welche die vorgenannten Nachteile nicht aufweisen.

Aufgabe der vorliegenden Erfindung war daher die Bereitstellung neuartiger aromatischer Carbodiimid- und Polyol-haltiger Zusammensetzungen, wobei die Carbodiimide idealerweise in flüssiger Form appliziert werden können.

Überraschenderweise konnte diese Aufgabe durch den Einsatz bestimmter flüssiger monomerer Carbodiimide in Polyol gelöst werden.

Gegenstand der vorliegenden Erfindung ist daher eine Zusammensetzung enthaltend
- mindestens ein Polyol und
- mindestens ein, vorzugsweise bei Raumtemperatur flüssiges monomeres Carbodiimid der Formel (I) 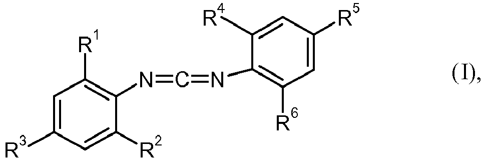
   wobei R¹, R², R⁴ und R⁶ unabhängig voneinander C₃-C₆-Alkyl ist
   und R³ und R⁵ unabhängig voneinander C₁-C₃-Alkyl ist.

Die Alkylreste können linear und/oder verzweigt sein. Vorzugsweise sind diese verzweigt.

Die in den erfindungsgemäßen Zusammensetzungen eingesetzten Carbodiimide der Formel (I) weisen vorzugsweise Reste R¹ bis R⁶ auf, die gleich sind.

In einer weiteren bevorzugten Ausführungsform der Erfindung entsprechen die Reste R¹ bis R⁶ Isopropyl.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die Verbindungen der Formel (I) sind lagerstabil, bei Raumtemperatur flüssig und zeichnen sich durch eine hervorragende Dosierbarkeit aus. Diese haben bei 25 °C bevorzugt Viskositäten von kleiner 2000 mPas, besonders bevorzugt von kleiner 1000 mPas.

Diese Carbodiimide sind herstellbar durch die Carbodiimidisierung von
trisubstituierten Benzolisocyanaten der Formel (II) 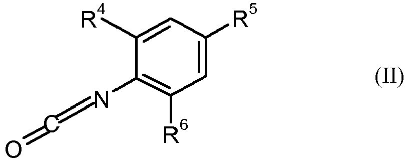 und 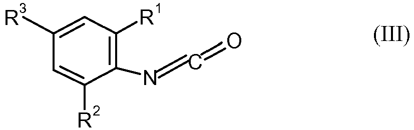
in der R¹, R², R⁴ und R⁶ unabhängig voneinander C₃-C₆-Alkyl ist
und R³ und R⁵ unabhängig voneinander C₁-C₃-Alkyl entspricht,
unter Abspaltung von Kohlendioxid bei Temperaturen von 40 °C bis 200 °C in Gegenwart von Katalysatoren und gegebenenfalls Lösungsmittel.

Bei den trisubstituierten Benzolisocyanaten handelt es sich vorzugsweise um 2,4,6-Triisopropylphenylisocyanat, 2,6-Diisopropyl-4-ethylphenylisocyanat und 2,6-Diisopropyl-4-methylphenylisocyanat. Die für deren Herstellung notwendigen trisubstituierten Benzolamine können - wie dem Fachmann bekannt- über eine Friedel-Crafts Alkylierung von Anilin mit dem entsprechenden Alken, Halogenalkan, Halogenalkenbenzol und/oder Halogencycloalkan hergestellt werden.

Anschließend werden diese mit Phosgen zum entsprechenden trisubstituierten Benzolisocyanat umgesetzt.

Die Carbodiimidisierung erfolgt dabei vorzugsweise gemäß der in Angew. Chem. 93, S. 855 - 866 (1981) oder DE-A-11 30 594 oder Tetrahedron Letters 48 (2007), S. 6002 - 6004 beschriebenen Verfahren.

Als Katalysatoren für die Herstellung der Verbindungen der Formel (I) sind in einer Ausführungsform der Erfindung starke Basen oder Phosphorverbindungen bevorzugt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Alkali-, Erdalkalioxide oder -Hydroxide, -Alkoholate oder -Phenolate, Carbonsäuremetallsalze und nicht basische Organometallverbindungen verwendet werden.

Die Carbodiimidisierung kann sowohl in Substanz als auch in einem Lösemittel durchgeführt werden. Ebenfalls möglich ist es, die Carbodiimidisierung zuerst in Substanz zu starten und anschließend nach Zugabe eines Lösemittels zu vervollständigen. Als Lösemittel können z. B. Benzine, Benzol und/oder Alkylbenzole eingesetzt werden.

Als Lösemittel können z. B. Benzine, Benzol und/oder Alkylbenzole eingesetzt werden.

Vorzugsweise werden die im erfindungsgemäßen Verfahren einzusetzenden Carbodiimide vor ihrem Einsatz gereinigt. Die Reinigung der Rohprodukte kann sowohl destillativ oder mittels Extraktion erfolgen. Als geeignete Lösemittel für die Aufreinigung können z. B. Alkohole, Ketone, Ether oder Ester eingesetzt werden.

Ebenfalls möglich ist auch die Herstellung der im erfindungsgemäßen Verfahren einzusetzenden Carbodiimide aus den trisubstituierten Anilinen durch Umsetzung mit CS₂ zum Thioharnstoffderivat und anschließender Umsetzung in basischen Hypochlorit-Lösungen zum Carbodiimid oder nach den in EP 0597382 A beschriebenen Verfahren.

Bei den Polyolen im Sinne der Erfindung handelt es sich um langkettige Verbindungen, die vorzugsweise ein Molekulargewicht in (g/mol) von bis zu 2000, bevorzugt zwischen 1000-2000 und besonders bevorzugt zwischen 500-1000 aufweisen.

Der Begriff Polyol im Sinne der Erfindung umfasst dabei sowohl langkettige Diole als auch Triole, wie auch Verbindungen mit mehr als drei Hydroxylgruppen je Molekül. Die Verwendung von Triolen ist besonders bevorzugt.

Bevorzugte Polyole sind Polyesterpolyole und/oder Polyetheresterpolyole, die bei Temperaturen von 30 - 80 °C in flüssiger Form vorliegen.

Vorteilhaft ist es, wenn das Polyol eine OH-Zahl von bis zu 200, vorzugsweise zwischen 20 und 150 und besonders bevorzugt zwischen 50 und 115, aufweist. Insbesondere eignen sich Polyesterpolyole, die Reaktionsprodukte von verschiedenen Polyolen mit aromatischen oder aliphatischen Dicarbonsäuren und/oder Polymere von Lactonen sind.

Bevorzugt hierbei sind aromatische Dicarbonsäuren, welche zur Bildung geeigneter Polyesterpolyole verwendet werden können. Besonders bevorzugt sind hier Terephthalsäure, Isophthalsäure, Phthalsäure, Phtalsäureanhydrid sowie substituierte Dicarbonsäureverbindungen mit Benzolkern.

Als aliphatische Dicarbonsäuren sind solche bevorzugt, welche zur Bildung geeigneter Polyesterpolyole verwendet werden können, besonders bevorzugt Sebacinsäure, Adipinsäure und Glutarsäure.

Als Polymere von Lactonen sind solche bevorzugt, welche zur Bildung geeigneter Poylesterpolyole verwendet werden können, besonders bevorzugt Polycaprolacton.

Sowohl bei den Dicarbonsäuren als auch bei den Polymeren von Lactonen handelt es sich um handelsübliche Substanzen.

Besonders bevorzugt sind auch solche Polyole, welche zur Bildung geeigneter Polyesterpolyole verwendet werden können, ganz besonders bevorzugt Ethylenglykol, Butandiol, Neopentylglykol, Hexandiol, Propylenglykol, Dipropylenglykol, Diethylenglykol und Cyclohexandimethanol.

In einer weiteren bevorzugten Ausführungsform der Erfindung handelt es sich bei den Polyolen um Polyetheresterpolyole.

Hierfür sind die Reaktionsprodukte von verschiedenen vorhergehend genannten Polyolen mit aromatischen oder aliphatischen Dicarbonsäuren und/oder Polymeren von Lactonen (z.B. Polycaprolacton) bevorzugt.

Bei den im Sinne der Erfindung eingesetzten Polyolen handelt es sich typischerweise um handelsübliche Verbindungen, die bei der Firma Bayer MaterialScience AG unter dem Handelsnamen Baycoll® oder Desmophen® erhältlich sind.

In einer weiteren Ausführungsform der Erfindung enthält die Zusammensetzung zusätzlich mindestens ein Diisocyanat.

Als Diisocyanate sind aromatische und aliphatische Diisocyanate bevorzugt. Besonders bevorzugt sind Toluol-2,4-diisocyanat, Toluol-2,6-diisocyanat, Phenylendiisocyanat, 4,4-Diphenylmethandiisocyanat, Methylen-bis(4-phenylisocynat), Naphttalen-1,5-diisocyanat, Tetramethylen-1,4-diisocyanat und/oder Hexamethylen-1,6-diisocyanat, ganz besonders bevorzugt Toluol-2,4-diisocyanat und Toluol-2,6-diisocyanat.

In einer weiteren Ausführungsform der Erfindung enthält die Zusammensetzung zusätzlich mindestens ein Diamin und/oder Diol.

Als Diamine, welche als Kettenverlängerer eingesetzt werden, sind 2-Methylpropyl-3,5-diamino-4-chlorobenzoat, Bis-(4,4'-amino-3-chlorophenyl)-methan, 3,5-Dimethylthio-2,4-toluylendiamin, 3,5-Dimethylthio-2,4-toluylendiamin, 3,5-Diethyl-2,4-toluylendiamin, 3,5-Diethyl-2,6-toluylendiamin, 4,4'-Methylen-bis-(3-chloro-2,6-diethylanilin) und 1,3-Propandiol-bis(4-aminobenzoat) bevorzugt.

Bei den im Sinne der Erfindung zur Kettenverlängerung eingesetzten Diaminen oder Diolen handelt es sich um handelsübliche Verbindungen, die bei der Firma Rheinchemie Rheinau GmbH unter dem Handelsnamen Addolink® erhältlich sind.

Als Diole für die Kettenverlängerung sind kurzkettige Diole mit einer Molmasse kleiner 200 g/mol, vorzugsweise Butandiol-1.4 oder auch Hexandiol-1,6 und/oder Hydrochinon-bis(2-hydroxyethyl)ether (HQEE) bevorzugt.

Bei den im Sinne der Erfindung eingesetzten Diolen handelt es sich um handelsübliche Verbindungen, die u.a. bei der Firma Rhein Chemie Rheinau GmbH unter dem Handelsnamen Addolink^{®} erhältlich sind.

Das Verhältnis von Carbodiimid zu Polyol beträgt vorzugsweise 0,1 - 5, besonders bevorzugt 1 - 3 Gew. Teile auf 100 Gew.-Teile Polyol.

Das Verhältnis von Diisocyanat zu Polyol beträgt vorzugsweise 20 bis 50 zu 100 Gew.-Teile, besonders bevorzugt 25 bis 35 zu 100 Gew.-Teile.

In den Fällen, in denen die Zusammensetzung neben dem Polyol und dem Carbodiimid sowie dem Diisocyanat zusätzlich mindestens ein Diamin und/oder oder Diol enthält, beträgt die Menge an Diamin und/oder Diol 5-30 Gew.-%, bezogen auf die Zusammensetzung.

In den Fällen, in denen die Zusammensetzung neben dem Polyol und dem Carbodiimid sowie dem Diisocyanat zusätzlich mindestens einen Katalysator enthält, beträgt die Menge an Katalysator 0,01-1 Gew.%, bezogen auf die Zusammensetzung.

Als Katalysatoren werden vorzugsweise Dibutylzinndilaurate oder Triethylendiamin in Dipropylenglycol eingesetzt.

Bei den im Sinne der Erfindungen eingesetzten Katalysatoren handelt es sich um handelsübliche Verbindungen, die bei der Fa. Rheinchemie Rheinau GmbH unter dem Handelsnamen Addocat® erhältlich sind.

Gegenstand der vorliegenden Erfindung ist zudem die Herstellung der erfindungsgemäßen Zusammensetzung, wonach das Polyol vorgelegt und das flüssige Carbodiimid nach Formel (I) oder eine Mischung aus Carbodiimiden nach Formel (I) eingerührt wird.

In den Fällen, in denen die erfindungsgemäße Mischung zusätzlich noch das Diisocyanat enthält wird dieses in die Zusammensetzung aus Polyol und mindestens einem Carbodiimid nach Formel (I) bei Temperaturen zwischen 80 und 130°C eingerührt. Das bei der dabei ablaufenden Polyadditionsreaktion entstehende Polymer ist ebenfalls Gegenstand der Erfindung.

Gegenstand der vorliegende Erfindung ist zudem das Polymer, erhältlich aus der Umsetzung aus mindestens einem Polyol und mindestens einem Carbodiimid nach Formel (I) mit einem Diisocyanat bei Temperaturen zwischen 80 und 130°C.

Das Verhältnis von Diisocyanat zu Polyol beträgt vorzugsweise 20 bis 50 zu 100 Gew.-Teile, besonders bevorzugt 25 bis 35 zu 100 Gew.-Teile.

Als Diisocyanate sind die vorgenannten aromatischen und aliphatischen Diisocyanate bevorzugt. Besonders bevorzugt sind Toluol-2,4-diisocyanat, Toluol-2,6-diisocyanat, Phenylendiisocyanat, 4,4-Diphenylmethandiisocyanat, Methylen-bis(4-phenylisocynat), Naphttalen-1,5-diisocyanat, Tetramethylen-1,4.diisocyanat und/oder Hexamethylen-1,6-diisocyanat, ganz besonders bevorzugt Toluol-2,4-diisocyanat und Toluol-2,6-diisocyanat.

In den Fällen, in denen die erfindungsgemäße Mischung neben dem Diisocyanat zusätzlich noch ein Amin und/oder Diol enthält wird dieses in die Zusammensetzung aus Polyol und mindestens einem Carbodiimid nach Formel (I) und Diisocyanat bei Temperaturen zwischen 40 und 100°C eingerührt.

In den Fällen, in denen die erfindungsgemäße Mischung neben dem Diisocyanat und dem Amin und/oder Diol zusätzlich noch mindestens einen Katalysator enthält wird dieser zunächst mit dem Diol vorgemischt und in die Zusammensetzung aus Polyol und mindestens einem Carbodiimid nach Formel (I) und Diisocyanat bei Temperaturen zwischen 40 und 100°C eingerührt.

Alternativ dazu kann die Herstellung der erfindungsgemäßen Zusammensetzungen auch nach dem sog. one-shot-Verfahren hergestellt werden. Dieses Verfahren, z.B. beschrieben in G. Oertels Kunststoff Handbuch 7, auf Seite 26, ist mit den erfindungsgemäßen Carbodiimiden analog anwendbar.

Gegenstand der vorliegenden Erfindung ist zudem die Verwendung der erfindungsgemäßen Zusammensetzungen in thermoplastischen Polyurethanen (TPU), Polyurethan-Elastomeren, PU-Klebstoffen, PU-Gießharzen oder PU-Schäume als Schutz gegen hydrolytischen Abbau.

Die nachfolgenden Beispiele dienen der Erläuterung der Erfindung, ohne dabei limitierend zu wirken.

### Ausführungsbeispiele

Es wurde ein polymeres Carbodiimid auf Basis von Tetramethylxylylendiisocyanat erhältlich unter der Bezeichnung Stabaxol® P 200 sowie ein festes monomeres Carbodiimid (Bis-2,6-Diisopropylphenyl-Carbodiimid) erhältlich unter der Bezeichnung Stabaxol® I der Firma Rhein Chemie Rheinau GmbH im Vergleich zum Carbodiimid (CDI I) der Formel 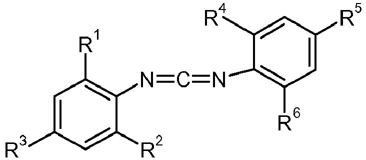 wobei die Reste R¹ bis R⁶ Isopropyl entsprechen, in Polyesterpolyol des Typs Desmophen® 2001 KS der Firma der Bayer MaterialScience AG geprüft.

### Herstellung des eingesetzten Carbodiimides in der erfindungsgemäßen Zusammensetzung

In einem ausgeheizten und mit Stickstoff befüllten 500 mL Planschliffkolben wurden unter Stickstoffstrom 400 g 2,4,6-Triisopropylphenylisocyanat vorgelegt und auf 140 °C erwärmt. Nach Zugabe von 400 mg 1-Methyl-phospholenoxid wurde das Reaktionsgemisch innerhalb von 5 Stunden auf 160 °C erhitzt. Im Anschluss wurde bei 160 °C solange nachreagiert bis ein NCO-Gehalt von < 1 % (entspricht > 95 % Umsatz) erreicht worden war. Das so erhaltene Rohprodukt wurde mittels Destillation gereinigt. Das erhaltene Produkt stellte eine helle gelbe Flüssigkeit mit der Viskosität von 700 mPas bei 25 °C dar.

### Thermische Stabilität

Zur Untersuchung der thermischen Stabilität wurden thermogravimetrische Analysen mit einer TGA-Messeinrichtung der Fa. Mettler Toledo (TGA/SDTA851) durchgeführt. Dafür wurde je 10- 15 mg Probe unter Stickstoff mit einer Temperaturrampe von 30 bis 600 °C und bei einer Heizrate von 10 °C / min analysiert. Bewertet wurde die Temperatur in °C beim Erreichen eines Gewichtverlustes von 5 % [T(5%)].

Die Ergebnisse werden in Tabelle 1 dargestellt:

| **Carbodiimid** | T(5%) **von Carbodiimid** [°C] |
|---|---|
| Stabaxol® I (V) | 200 |
| Stabaxol® P 200 (V) | 270 |
| CDI I (erf) | 260 |

| | |
|---|---|
| V = Vergleichsbeispiel, erf = erfindungsgemäß | |

### Säurezahlabbau in Polyesterpolyol

Wie bekannt, kann die Wirkung eines Hydrolyseschutzmittels auf Basis sterisch gehinderter Carbodiimide in flüssigen Polyesterpolyolen mittels Säurezahlabbau geprüft werden.

Der Säurezahlabbau in der erfindungsgemäßen Zusammensetzung wurde beim Einsatz des CDI I im Vergleich zu den oben genannten Stabaxol I und Stabaxol P 200 in dem Polyesterpolyol Desmophen® 2001 KS der Bayer MaterialScience AG geprüft.

Dazu wurden bei 80°C 1 Gew.% der oben genannten Carbodiimide in Polyesterpolyol mit einer gemessenen Säurezahl von ca. 0,9 mg KOH/g eingerührt und regelmäßig die Säurezahl gemessen.

Die Ergebnisse werden in Tabelle 2 dargestellt:

| **Carbodiimid in Desmophen 2001 KS** | **Säurezahl [mg KOH/g] nach 0 min** | **Säurezahl [mg KOH/g] nach 30 min** | **Säurezahl [mg KOH/g] nach 60 min** | **Säurezahl [mg KOH/g] nach 120 min** | **Säurezahl [mg KOH/g] nach 120 min** | **Säurezahl [mg KOH/g] nach 480 min** |
|---|---|---|---|---|---|---|
| CDI I (erf) | 0,86 | 0,51 | 0,27 | 0,09 | 0,00 | |
| Stabaxol® I (V) | 0,92 | 0,67 | 0,45 | 0,26 | 0,12 | 0,04 |
| Stabaxol® P 200 (V) | 0,87 | 0,69 | 0,55 | 0,42 | 0,35 | 0,28 |

| | | | | | | |
|---|---|---|---|---|---|---|
| V = Vergleichsbeispiel, erf = erfindungsgemäß | | | | | | |

Die Ergebnisse zeigen, dass die Säure in der erfindungsgemäßen Polyesterpolyol/Carbodiimid-Zusammensetzung überraschenderweise deutlich schneller abgebaut wird als bei den Zusammensetzungen, die Stabaxol® I oder Stabaxol® P 200 enthalten. Gleichzeitig zeigt das Carbodiimid der erfindungsgemäßen Zusammensetzung eine hervorragende thermische Stabilität, die bisher nur bei den weniger reaktiven polymeren Carbodiimiden bekannt war.

## Patentansprüche

1. Zusammensetzung enthaltend
- mindestens ein Polyol und
- mindestens ein, vorzugsweise flüssiges, Carbodiimid der Formel (I) 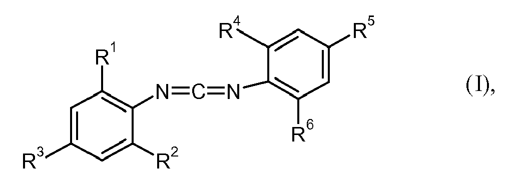
wobei R¹, R², R⁴ und R⁶ unabhängig voneinander C₃-C₆-Alkyl ist
und R³ und R⁵ unabhängig voneinander C₁-C₃-Alkyl entspricht, und
- mindestens ein Diisocyanat, wobei das Verhältnis von Diisocyanat zu Polyol 20 - 50 zu 100 Gew.-Teile, besonders bevorzugt 25 bis 35 zu 100 Gew.-Teile beträgt.

2. Zusammensetzung nach Anspruch 1, **dadurch gekennzeichnet, dass** die Reste R¹ bis R⁶ innerhalb des Moleküls gleich sind.

3. Zusammensetzung nach Anspruch 1 oder 2, **dadurch gekennzeichnet, dass** die Reste R¹ bis R⁶ Isopropyl sind.

4. Zusammensetzung nach Anspruch 1 bis 3, **dadurch gekennzeichnet, dass** das Carbodiimid bei Raumtemperatur flüssig ist.

5. Zusammensetzung nach einem der Ansprüche 1 bis 4, **dadurch gekennzeichnet, dass** es sich bei den Carbodiimiden um Mischungen aus mehreren Carbodiimiden der Formel (I) handelt.

6. Zusammensetzung nach einem der Ansprüche 1 bis 5, **dadurch gekennzeichnet**, es sich bei dem Polyol um Polyesterpolyole und/oder Polyetheresterpolyole handelt.

7. Zusammensetzung nach Anspruch 5, **dadurch gekennzeichnet**, es sich bei dem Polyol um bei Temperaturen von 30 - 80 °C flüssige Polyesterpolyole und/oder Polyetheresterpolyole handelt.

8. Zusammensetzung nach einem der Ansprüche 1 bis 7, **dadurch gekennzeichnet, dass** diese mindestens einen Katalysator enthalten.

9. Zusammensetzung nach einem der Ansprüche 1 bis 8, **dadurch gekennzeichnet, dass** diese zusätzlich mindestens ein Diamin und/oder ein kurzkettiges Diol mit einer Molmasse kleiner 200 g/mol enthält.

10. Verfahren zur Herstellung einer Zusammensetzung nach Anspruch 1 , **dadurch gekennzeichnet, dass** das Polyol vorgelegt und das flüssige Carbodiimid nach Formel (I) oder eine Mischung aus flüssigen Carbodiimiden nach Formel (I) eingerührt oder zudosiert wird.

11. Verfahren zur Herstellung einer Zusammensetzung nach Anspruch 10 , **dadurch gekennzeichnet, dass** in die Zusammensetzung aus Polyol und mindestens einem Carbodiimid nach Formel (I) und Diisocyanat bei Temperaturen zwischen 80 und 130°C eingerührt wird.

12. Polymer, erhältlich durch Umsetzung von mindestens einem Polyesterpolyol und mindestens einem Carbodiimid, vorzugsweise mindestens einem flüssigen Carbodiimid, der Formel (I) 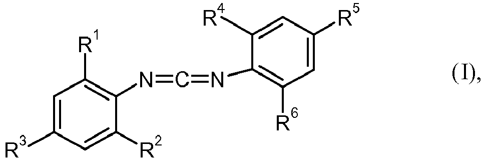
wobei R¹, R², R⁴ und R⁶ unabhängig voneinander C₃-C₆-Alkyl ist
und R³ und R⁵ unabhängig voneinander C₁-C₃-Alkyl entspricht mit einem Diisocyanat, wobei das Verhältnis von Diisocyanat zu Polyol 20 - 50 zu 100 Gew.-Teile, besonders bevorzugt 25 bis 35 zu 100 Gew.-Teile beträgt, bei Temperaturen zwischen 80 und 130°C.

13. Verfahren zur Herstellung einer Zusammensetzung nach Anspruch 9, **dadurch gekennzeichnet, dass** der Katalysator zunächst mit dem Diamin und/oder dem kurzkettigen Diol mit einer Molmasse kleiner 200 g/mol vorgemischt und in die Zusammensetzung aus Polyol und mindestens einem Carbodiimid, vorzugsweise einem flüssigen Carbodiimid, nach Formel (I) und dem Diisocyanat, wobei das Verhältnis von Diisocyanat zu Polyol 20 - 50 zu 100 Gew.-Teile, besonders bevorzugt 25 bis 35 zu 100 Gew.-Teile beträgt, bei Temperaturen zwischen 40 und 100°C eingerührt wird.

14. Verwendung der Zusammensetzung nach einem der Ansprüche 1 bis 9 in thermoplastischen Polyurethanen.

15. Verwendung der Zusammensetzung nach einem der Ansprüche 1 bis 9 in PU-Elastomeren, Klebstoffen, Gießharzen oder PU-Schäumen.

## Claims

1. Composition comprising
- at least one polyol and
- at least one, preferably liquid, carbodiimide of the formula (I) 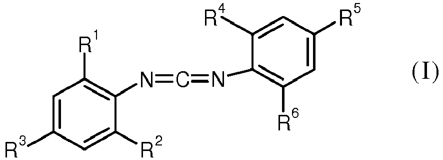
where R¹, R², R⁴ and R⁶ is each independently C₃-C₆-alkyl
and R³ and R⁵ is each independently C₁-C₃-alkyl, and
- at least one diisocyanate, where the ratio of diisocyanate to polyol is 20-50:100 parts by weight, more preferably 25 to 35:100 parts by weight.

2. Composition according to Claim 1, **characterized in that** the R¹ to R⁶ radicals are the same within the molecule.

3. Composition according to Claim 1 or 2, **characterized in that** the R¹ to R⁶ radicals are isopropyl.

4. Composition according to Claims 1 to 3, **characterized in that** the carbodiimide is liquid at room temperature.

5. Composition according to any of Claims 1 to 4, **characterized in that** the carbodiimides are mixtures of a plurality of carbodiimides of the formula (I).

6. Composition according to any of Claims 1 to 5, **characterized in that** the polyol comprises polyester polyols and/or polyether ester polyols.

7. Composition according to Claim 5, **characterized in that** the polyol comprises polyether ester polyols and/or polyester polyols liquid at temperatures of 30-80°C.

8. Composition according to any of Claims 1 to 7, **characterized in that** it comprises at least one catalyst.

9. Composition according to any of Claims 1 to 8, **characterized in that** it additionally comprises at least one diamine and/or a short-chain diol having a molar mass less than 200 g/mol.

10. Process for preparing a composition according to Claim 4, **characterized in that** the polyol is initially charged and the liquid carbodiimide of formula (I) or a mixture of liquid carbodiimides of formula (I) is stirred in or metered in.

11. Process for preparing a composition according to Claim 10, **characterized in that** into the composition composed of polyol and at least one carbodiimide of formula (I) and diisocyanate is stirred at temperatures between 80 and 130°C.

12. Polymer obtainable by reaction of at least one polyester polyol and at least one carbodiimide, preferably at least one liquid carbodiimide, of the formula (I) 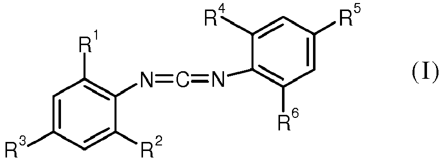
where R¹, R², R⁴ and R⁶ is each independently C₃-C₆-alkyl
and R³ and R⁵ is each independently C₁-C₃-alkyl with a diisocyanate, where the ratio of diisocyanate to polyol is 20-50:100 parts by weight, more preferably 25 to 35:100 parts by weight, at temperatures between 80 and 130°C.

13. Process for preparing a composition according to Claim 9, **characterized in that** the catalyst is first premixed with the diamine and/or the short-chain diol having a molar mass less than 200 g/mol and stirred into the composition composed of polyol and at least one carbodiimide, preferably a liquid carbodiimide, of formula (I) and that diisocyanate, where the ratio of diisocyanate to polyol is 20-50:100 parts by weight, more preferably 25 to 35:100 parts by weight, at temperatures between 40 and 100°C.

14. Use of the composition according to any of Claims 1 to 9 in thermoplastic polyurethanes.

15. Use of the composition according to any of Claims 1 to 9 in PU elastomers, adhesives, casting resins or PU foams.

## Revendications

1. Composition contenant
- au moins un polyol et
- au moins un carbodiimide de préférence liquide de formule (I) 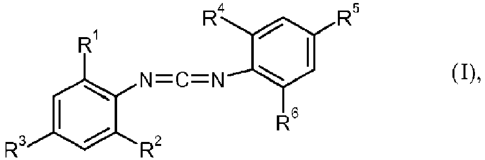 R¹, R², R⁴ et R⁶ représentant, indépendamment les uns des autres, C₃-C₆-alkyle et R³ et R⁵ correspondant, indépendamment l'un de l'autre, à C₁-C₃-alkyle, et
- au moins un diisocyanate, le rapport de diisocyanate à polyol valant 20-50:100 parties en poids, de manière particulièrement préférée 25-35:100 parties en poids.

2. Composition selon la revendication 1, **caractérisée en ce que** les radicaux R¹ à R⁶ au sein de la molécule sont identiques.

3. Composition selon la revendication 1 ou 2, **caractérisée en ce que** les radicaux R¹ à R⁶ représentent isopropyle.

4. Composition selon la revendication 1 à 3, **caractérisée en ce que** le carbodiimide est liquide à température ambiante.

5. Composition selon l'une quelconque des revendications 1 à 4, **caractérisée en ce qu'**il s'agit, pour les carbodiimides, de mélanges de plusieurs carbodiimides de formule (I).

6. Composition selon l'une quelconque des revendications 1 à 5, **caractérisée en ce qu'**il s'agit, pour le polyol, de polyesterpolyols et/ou de polyétheresteipolyols.

7. Composition selon la revendication 5, **caractérisée en ce qu'**il s'agit, pour le polyol, de polyesterpolyols et/ou de polyétheresterpolyols liquides à des températures de 30-80°C.

8. Composition selon l'une quelconque des revendications 1 à 7, **caractérisée en ce qu'**elle contient au moins un catalyseur.

9. Composition selon l'une quelconque des revendications 1 à 8, **caractérisée en ce qu'**elle contient en outre au moins une diamine et/ou un diol à courte chaîne, présentant une masse molaire inférieure à 200 g/mole.

10. Procédé pour la préparation d'une composition selon la revendication 1, **caractérisé en ce qu'**on dispose au préalable le polyol et on délaie ou on ajoute en dosant le carbodiimide liquide selon la formule (I) ou un mélange de carbodiimides liquides selon la formule (I).

11. Procédé pour la préparation d'une composition selon la revendication 10, **caractérisé en ce qu'**on délaie, dans la composition de polyol et d'au moins un carbodiimide selon la formule (I) et du diisocyanate à des températures entre 80 et 130°C.

12. Polymère, pouvant être obtenu par transformation d'au moins un polyesterpolyol et d'au moins un carbodiimide, de préférence d'au moins un carbodiimide liquide, de formule (I) 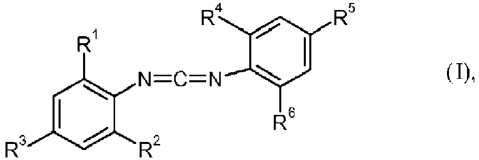 R¹, R², R⁴ et R⁶ représentant, indépendamment les uns des autres, C₃-C₆-alkyle et R³ et R⁵ correspondant, indépendamment l'un de l'autre, à C₁-C₃-alkyle, avec un diisocyanate, le rapport de diisocyanate à polyol valant 20-50:100 parties en poids, de manière particulièrement préférée 25-35:100 parties en poids, à des températures entre 80 et 130°C.

13. Procédé pour la préparation d'une composition selon la revendication 9, **caractérisé en ce que** le catalyseur est d'abord prémélangé avec la diamine et/ou le diol à courte chaîne présentant une masse molaire inférieure à 200 g/mole et est délayé dans la composition de polyol et d'au moins un carbodiimide, de préférence un carbodiimide liquide, selon la formule (I) et de diisocyanate, le rapport de diisocyanate à polyol valant 20-50:100 parties en poids, de manière particulièrement préférée 25-35:100 parties en poids, à des températures entre 40 et 100°C.

14. Utilisation de la composition selon l'une quelconque des revendications 1 à 9 dans des polyuréthanes thermoplastiques.

15. Utilisation de la composition selon l'une quelconque des revendications 1 à 9 dans des élastomères de PU, des adhésifs, des résines coulées ou des mousses de PU.
